# EUROPEAN PATENT SPECIFICATION

(11) **EP 1 103 533 B1**
(45) Date of publication and mention of the grant of the patent: **08.08.2007**
(21) Application number: 00310537.6
(22) Date of filing: 28.11.2000
(51) Int. Cl.: C04B 38/10, C04B 28/02, E01C 7/14, E01C 19/02, B28C 5/38, B28C 9/04, B28C 7/06

(54) **Method for producing foam concrete**
Verfahren zur Herstellung von Schaumbeton
Procédé pour la fabrication de béton mousse

(30) Priority: 29.11.1999 GB 9928168
(43) Date of publication of application: 30.05.2001
(73) Proprietor: Volumetric Concrete LLP, London SW18 4DF (GB)
(72) Inventor: Etherton, Philip, Betchworth Surrey RH3 7JL (GB)
(74) Representative: Lowther, Deborah Jane

(56) References cited:
- FR-A- 2 684 325
- GB-A- 2 321 055
- US-A- 5 494 514
- PATENT ABSTRACTS OF JAPAN vol. 013, no. 385 (M-864), 25 August 1989 (1989-08-25) & JP 01 137012 A (PENTA OCEAN CONSTR CO LTD), 30 May 1989 (1989-05-30)

## Description

The present invention relates to improvements in and relating to the production of concrete and, in particular, to the production of foam concrete. The present invention is of particular application to the manufacture of concrete on-site for use in filling trenches, small holes and voids.

In recent years, foamed or foam concrete has been used increasingly to backfill excavations in roads or footpaths following, for example, the repair or provision of utility services. Foam concrete has the particular advantages that it is lightweight, free flowing and easy to level, does not require compaction and, if required, can easily be removed after hardening. It is therefore an ideal material for trench reinstatement. The product is usually made by blending cement with a fine aggregate such as sand in a typical ratio of 1:3, before adding water to form a base mix having a wet density of about 2200kg/m³. A lightweight preformed foam is then added to the mix to increase the volume and reduce the wet density to approximately 1400kg/m³, resulting in a strength at 28 days of about 4-6 N/m². The production of foam concrete is described in US5494514 and JP1137012.

Foam concrete is not, however, suited to being subjected to constant rotation and mixing. Moreover, it is usually desirable slightly to vary the respective components of the foam concrete mixture in order to achieve, for example, a particular strength or hardening rate in different applications or weather conditions. Thus, although it is possible to supply pre-mixed foam concrete in a ready mix truck, it is usually preferable to manufacture the foam concrete on-site on a continuous basis, as and when required, using mobile concrete making equipment.

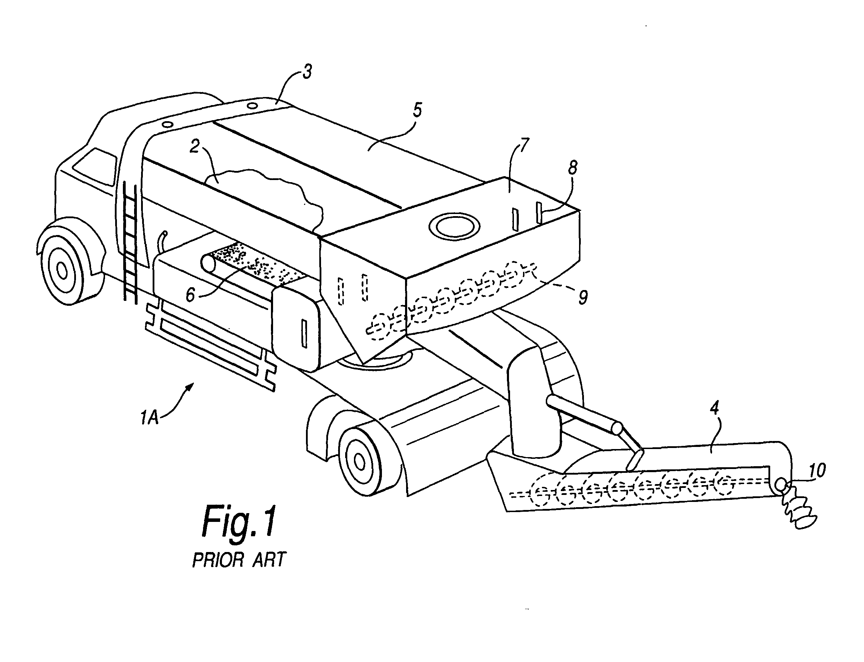

A typical mobile concrete making vehicle, as shown in Figure 1, will have separate compartments for the storage of the cement, water and aggregate (such as sand and stone), as well as independent delivery systems for supplying liquid admixtures (such as, for example, accelerators, retarders and foaming agents). When the concrete is required, metered amounts of the cement and aggregate are conveyed to a mixer at the back of the vehicle and the water and liquid admixture are introduced in the required quantities as the cement and aggregate enter the mixer. Usually, the mixer will be set at an upward angle of 30° or so from the horizontal, so that the effects of gravity and the rotating mixer element combine to produce a uniformly mixed concrete at the delivery end of the mixer. The concrete is then discharged by means of one or more flexible extension chutes into the excavation.

Although such equipment is capable of providing foam concretes with a range of selected properties, and is particularly effective for small-scale reinstatements, it has a number of limitations. For example, such apparatus can only be used to produce certain types of foam concrete and can only be used in certain weather conditions. Furthermore, the materials and equipment required to produce foam concrete lead to high operating costs that tend to limit its use.

The present invention is directed towards providing improvements in and relating to the production of concrete, which improvements are of particular relevance to the production of foam concrete.

The present invention provides process for producing foam concrete, wherein at least a part of the aggregate used to form the concrete mix is an excavated material, characterised in that the excavated material comprises recycled material, and in that the foam concrete is produced on a continuous basis using mobile concrete making equipment including storage means for storing the components of the concrete mix and mixing means for mixing them together prior to dispensing.

Producing the foam concrete on a continuous basis, as and when required, rather than it being produced batchwise, allows the amount and composition of the concrete mix to be adjusted to suit each application.

"Excavated material" that comprises "recycled material" is intended to cover any material that has been removed from a road, footpath or other manmade construction, including building foundations. Such material may comprise surface material such as broken concrete, asphalt or stone paving, as well as sub-surface material, including, for example, clay, gravel, sand, silt, etc. In the past, the excavated material was merely replaced in an excavation following a repair. However, owing to problems of improper compaction, etc., such material is usually now mixed with a filler or binder material before being replaced in the excavation, or is taken to landfill, and an alternative backfill material is used.

Preferably, the excavated material will be stored in an aggregate hopper provided with vibrators that operate only periodically, since continuous vibration can result in excessive clumping, particularly in excavated materials with high clay contents. It will usually be necessary to use an aggregate hopper with more steeply angled walls (e.g. at an angle of more than 50° to the horizontal) than in typical hoppers, since the excavated material tends to move less freely.

The use of foam concrete as a backfill in highway repairs has become increasingly specialised due to the need to meet exacting government standards for the quality of the reinstatement. Thus, in order to achieve the required wet density and hence, the required 28-day strength, the type and amount of the respective components needs to be carefully controlled. Nevertheless, the present inventor has found that it is possible successfully to use a recycled, excavated material as a replacement in part or total for the aggregates (e.g. sand) currently used to produce foam concrete. Considerable cost savings are thereby achieved due to the reduced cost of the aggregate, as well as the saving in landfill taxes.

The invention may be employed to produce low density foam concretes with wet densities of not more than 1600 kg/m³. Low density foam concretes having wet densities of not more than 1500 kg/ m³ may be advantageously produced in accordance with the invention and are suitable for many applications, with wet densities in the range 1000-1400 kg/ m³, and, even more preferably, 1000 to 1300 kg/m³, being ideal for use in trench reinstatement. The low density foam concrete is preferably formed by adding to the concrete mix a preformed foam in which the air is already entrained (as opposed to a foam concentrate), so as to ensure a high void volume. A stable foam may be produced using a suitable dry foam generator. In this way, a foam concrete having a void volume of more than 30% and preferably more than 40% may be produced.

The recycled, excavated material will usually need to be crushed and/or graded to remove particles of undesirable sizes. Although large particles provide strength, particles over 2 or 3 cm can segregate from the mix and form 'hard spots'. This can have the undesirable effect in parts of the mix of increasing the 28-day crushing strength above acceptable limits. It is therefore desirable to process the excavated material to ensure the maximum particle size is 2 cm and, in order to achieve an even foam matrix, to have a minimum of 30%, and more preferably, a minimum of 40% fine particles less than 4mm, an especially preferred size range for such particles being 1-4 mm

At least 50% by weight, and advantageously, at least 75%, of the aggregate in the mix may be the excavated material. For most applications, substantially all the aggregate in the mix may comprise the excavated material. In that case, the excavated material and a cement or cement-like material may be present in the concrete mix in a respective ratio of between 4:1 and 8:1, a ratio of about 6:1 being preferred. It will therefore be appreciated that significantly less cement is required than in the prior art foam concretes referred to above.

Depending on its origins, the excavated material will have a variable clay content. Where a high clay content of 20-40% is present, it will usually be necessary to use a plasticiser to improve the fluidity of the concrete mix, the plasticiser:water weight ratio being selected dependent upon the clay content. Ideally, sufficient plasticiser should be used to ensure the water:cement ratio is maintained within the range of 0.5:1 to 0.6:1, thereby maintaining the fluidity of the mix without adversely affecting setting times or 28 day strength of the final mix. Such additives, which may include modified lignosulphonates, synthetic polymers, etc., are known in the art and counteract the tendency of finely divided particles such as clay to clump together. As a result, less water is required in the concrete mix than would otherwise be the case. The plasticiser should be selected so as to be compatible with any foaming agents, accelerators, or other fluid additives, also present in the concrete mix.

The foam concrete will normally be used to backfill a road or footpath excavation. If additional processing equipment is used, at least some of the material removed from the road or footpath excavation may be crushed and/or graded on-site prior to being recycled to form the concrete, resulting in significant cost savings.

The components of the concrete mix may be introduced into, and mixed inside, an elongate tubular mixer prior to being dispensed as a mixed concrete from the downstream end of the mixer, and wherein the components are introduced into the elongate mixer at successive points along its length. The concrete so produced will usually be uniformly mixed and ready for immediate use. By introducing the ingredients at different times into the mix, it is possible to control the composition more carefully than in prior art mixers so as to produce a wider range of foam concretes. Preferably, liquid ingredients are introduced at successive injection paints through jets to ensure good dispersal of the liquids.

The aggregate and cement or cement-like material may be introduced into the mixer at the upstream end and a foaming agent or preformed foam is introduced at a successive injection point along its length. Water may be introduced either at the same time as the aggregate and cement or cement-like material or through a subsequent injection point that is disposed upstream of the injection point where the foaming agent or preformed foam is introduced. An accelerator may be introduced at an injection point disposed at or near the downstream end of the mixer. As a result of the shorter dwell time of the accelerator in the mixer, a larger amount of accelerator, or a faster acting accelerator, may be used to produce foam concrete that hardens very quickly, for example, in cold weather conditions or when a rapid repair is required, without the risk of the material "flash setting" in the mixer. It may also be desirable to heat the water to above ambient temperature prior to its introduction. The process may therefore be used to produce foam concrete that undergoes rapid hardening within 30, or more preferably, 20 minutes (to achieve, for example, an early strength of 1 N/mm²).

If the components of a concrete mix are introduced into and mixed in an elongate mixer, prior to being dispensed as a mixed concrete from the downstream end of the mixer, the elongate mixer may be provided with one or more supply means disposed along its length for the successive introduction of the components into the mixer.

The elongate mixer may comprise a rigid tubular housing provided with internal agitating means and supply means comprising one or more injection points disposed along its length, for the successive introduction of the concrete components. The tubular housing may include a hinged lid portion that provides protection, in use, from the moving agitating means.

The upstream end of the elongate mixer may be provided with supply means, usually in the form of conveyor means, for supplying aggregate and cement thereto; this may occur through the opening defined by the upstream end of the tube or through an opening adjacent thereto in the housing wall. Supply means may introduce water into the mixer with the aggregate and cement or the mixer may be provided with injection means connected to water supply means, which injection means are disposed at or near the upstream end of the mixer.

The mixer may be provided at a subsequent point downstream with injection means connected to foam supply means. Preferably, injection means are disposed at or near the downstream end of the mixer and are connected to means for supplying an accelerator.

Where internal agitating means are provided, they may include one or more portions or elements of a different configuration so as to cause turbulence in the mixture during use. Such turbulence will cause the mix to move backwards upstream, thereby improving the homogeneity of the mix. Preferably, the internal agitating means will comprise auger flighting and a plurality of additional backwardly angled blades spaced at intervals along the auger. In order to ensure that any backward movement of the mix is localised, the auger flighting preferably extends so that it is in close proximity to the interior surface of the mixer, thereby preventing runback.

As a result of the design of the agitating means, the outlet end of the tubular housing may be located at, or adjustable to, ground level for direct dispensing of the concrete. The housing may also be capable of being pivoted from side-to-side and/or being raised and lowered.

A preferred method and apparatus for producing concrete in accordance with the present invention will now be described, by way of example only, with reference to the accompanying drawings in which:
- Figure 1: is a schematic perspective view of a prior art concrete mixing vehicle;
- Figure 2: is a schematic perspective view of a concrete mixing vehicle for use in accordance with the present invention;

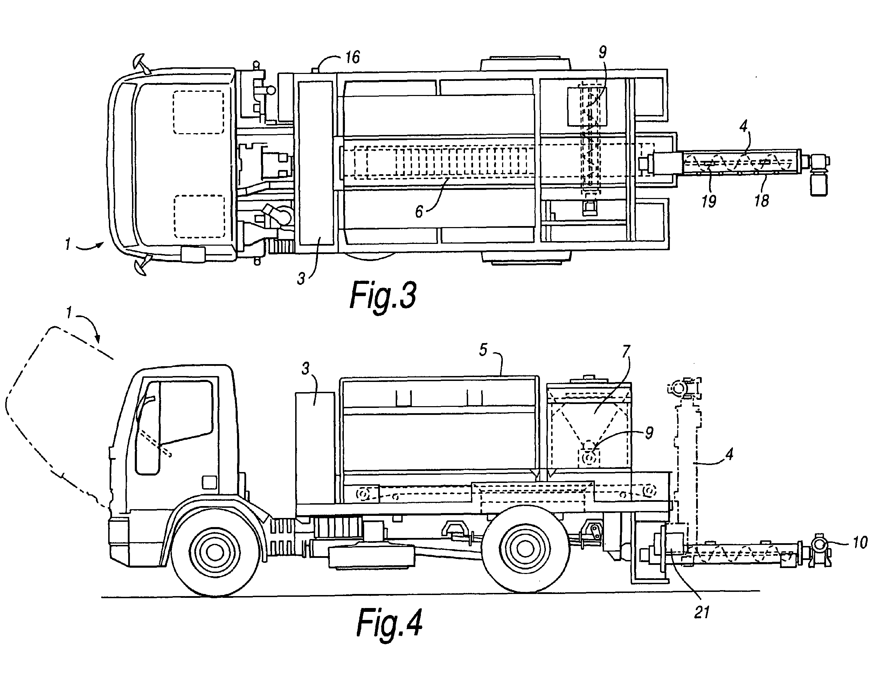

- Figure 3: is a plan view of the concrete mixing vehicle shown in Figure 2;
- Figure 4: is a side view of the concrete mixing vehicle shown in Figure 2; and,
- Figures 5a and 5b: are schematic sectional views showing how mixing occurs within the mixer of the concrete mixing vehicle shown in Figure 2.

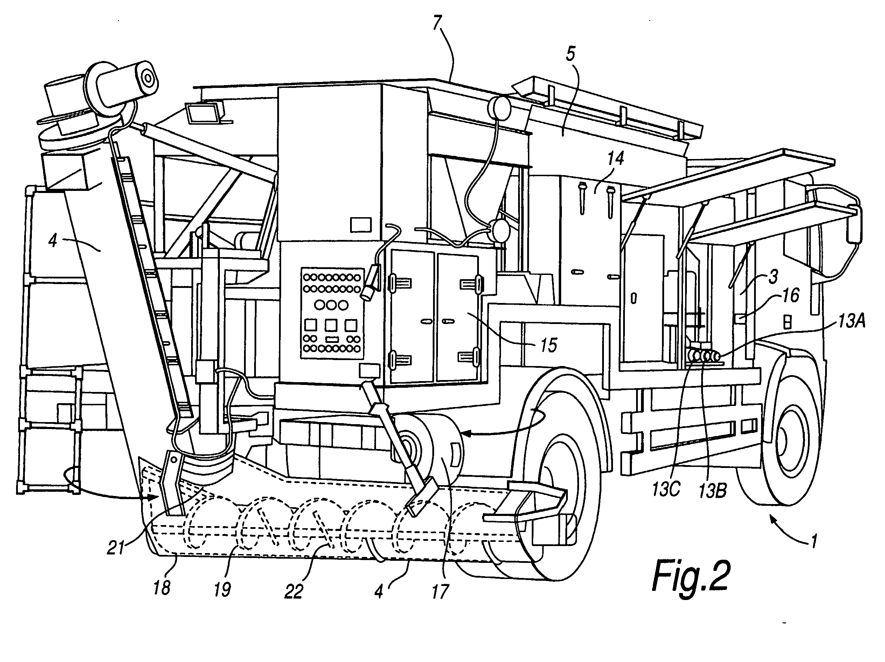

The vehicles shown in Figures 1 and 2 are suitable for the production of foam concrete on-site on a continuous basis for use, for example, in trench reinstatement or similar back filling applications. As indicated above, Figure 1 depicts a prior art concrete mixing vehicle 1A, while Figure 2 shows a preferred concrete mixing vehicle 1 for use in accordance with the present invention.

The arrangement and function of the main storage and delivery systems of the present vehicle 1 are the same as that of the prior art vehicle 1A. Thus, in each vehicle 1A,1 the water is stored in a water tank 3 mounted at the front of the vehicle and is pumped hydraulically to a mixer 4 located at the rear of the vehicle. The aggregate 2 is stored in open-topped bins 5 located behind the water tank 3, and conveyor belt means 6 mounted directly underneath the open bottoms of the bins 5 transport the aggregate to the mixer 4. The cement is stored in a watertight bin 7 that is positioned at the back of the vehicle. The bin 7 is provided with vibrators 8 and internal mixing/discharge means 9 that delivers the concrete to the conveyor belt means 6 below. Independent storage systems for supplying liquid admixtures such as, for example, accelerators, retarders, and foaming agents are provided, as well as monitoring and control systems to ensure accurate proportioning and monitoring of the amounts of the respective components of the concrete mixture. In each vehicle 1A,1 the components are combined and mixed inside the elongate mixer 4 prior to discharge from the delivery end 10.

The present vehicle 1 will now be described in more detail with particular reference to the modifications that have been made thereto.

The vehicle 1 has been adapted to enable recycled, excavated material to be used as the aggregate. Because such material has a variable clay and water content making it difficult to move freely out of the aggregate bins 5, control means are provided to enable the aggregate vibrators attached to the bins to be switched on and off in timed cycles, which may be adjusted depending on the clay content of the material. The walls of the bins also extend at a steeper angle than usual (of 55° to the horizontal) to assist in the dispensing of the material.

Where the clay content of the excavated material is high the use of a plasticiser or water inhibitor may be necessary. The vehicle includes additional storage and delivery means for supplying the inhibitor. Dry foam generating means are also provided to enable a stable, preformed foam to be added to the mix.

Chemical tanks for storing the foaming agent, accelerator and inhibitor are located together underneath the main skid/platform of the vehicle 1. An inhibitor pump 13A, hot water pump 13B and accelerator pump 13C are all housed in a pump cabinet 13 behind the water tank 3. A foam generator cabinet 14 on the side of the vehicle includes a foam pump and dosing meter for dispensing dry foam. An air compressor and high pressure pump is provided in a further cabinet 15, the air compressor supplying air to the foam generator cabinet 14 and to cement aerators in the cement bin 7. All of the pumps on the vehicle 1, as well as the aggregate conveyor 6 and the cement discharge screw 9, are controlled by adjusting a frequency controller.

The present vehicle 1 is specially adapted for use in low temperatures. To achieve rapid hardening in foam concretes, it is usually necessary, in addition to adding an accelerator, to ensure that the concrete mix is dispensed at above 10°C, and preferably, at above 20°C. Heating means 16 are installed in the water tank 3 of the present vehicle 1 to preheat the water to 40°C, or even as much as 50°C, to enable the concrete mix to be dispensed at the desired temperature whatever the weather conditions. The hot water is drawn from a floating arm inside the tank 3 that ensures that the water required for mixing is extracted from the hottest point in the tank. Cooler water for the high pressure wash down hose 17 is taken from the bottom of the tank. An internal baffle arrangement is also provided to ensure that there is always sufficient water in the tank 3 to cover the heating elements.

The water heating means 16 are adapted to be connectable to an external power supply for, for example, overnight heating, or to an onboard power supply. It is particularly desirable to be able to use the heating means 16 while the vehicle 1 is moving, however, this would not normally be possible. The present vehicle 1 therefore includes control means including software that is capable of monitoring the engine revs and bringing only a suitable number of the heating means into circuit while the vehicle is moving, so as to prevent engine stalling. For frost protection, on board heaters are also fitted to the pump and foam generator cabinets 13,14 and trace heating is supplied on all chemical and water lines. Electrical heating elements may also be incorporated in the material hoppers.

The components of the concrete mix are introduced into, and mixed inside, the elongate mixer 4 at the rear of the vehicle. Referring to Figure 2, the mixer 4 comprises a rigid housing 18 in the shape of a deep, rounded channel with a pivotable lid and internal auger flighting 19. The mixer 4 is stored locked in an upright position but, as shown by dotted lines in Figure 2, is capable of being lowered to a horizontal or near horizontal position. In that position, the mixer 4 can move 90° in either direction providing radial movement. When lowered, the mixer can discharge directly into an excavation. For footpaths, one or more stainless steel chutes (not shown) can be attached.

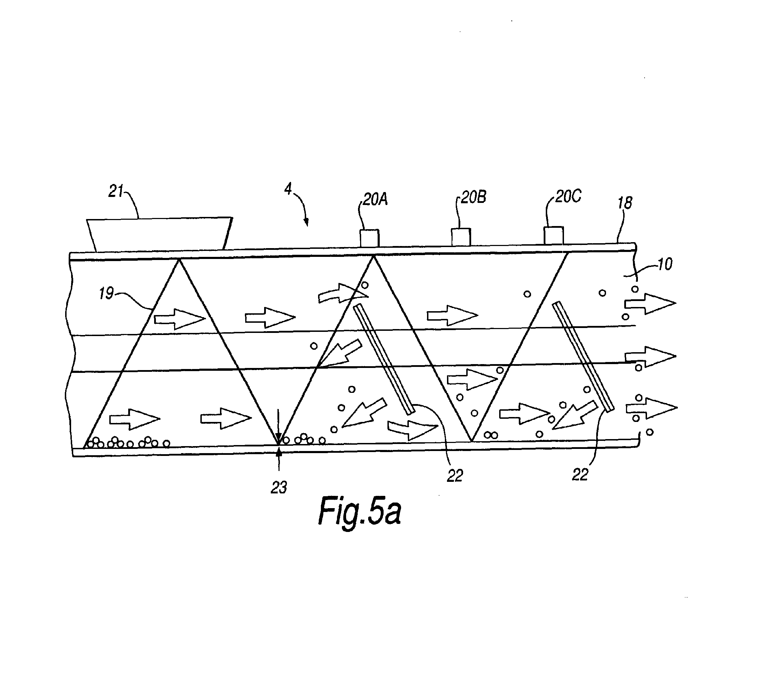

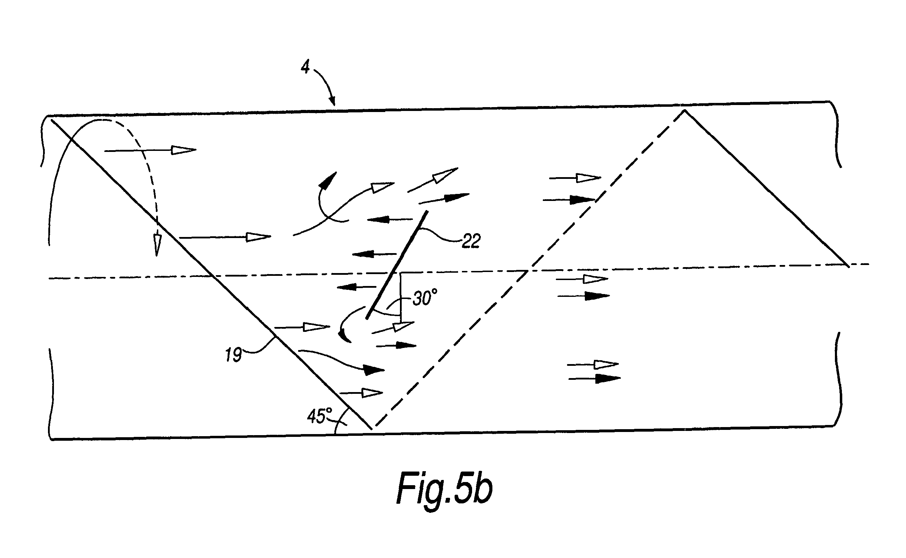

In the prior art vehicle 1A, all the components are introduced into the upstream end of the mixer 4 at the same time. The present mixer 4 has been redesigned to enable the components to be added at different times so as to allow better control of the final composition. As shown schematically in Figure 5, injection points 20A, 20B 20C are provided at selected spaced intervals along the length of the mixer 4 to enable the components to be added as and when required.

In use, the excavated material and cement drops from the conveyor belt means 6 into the upstream end 21 of the elongate mixer 4. The auger flighting 19 then mixes the solid material and causes it to pass down the mixer 4 to a nearby first injection point 20A where the hot water and inhibitor are introduced together. A second injection point 20B halfway down the mixer 4 introduces the preformed foam. Finally, 20 cm from the downstream end 10 of the mixer 4, a third injection point 20C is provided for the introduction of the accelerator. Because the dwell time of the accelerator in the mixer 4 is so short, it is possible to use fast acting hardeners without the risk of premature hardening occurring within the mixer itself.

The mixer 4 is also provided with one or more rectangular, flat, back angled paddle blades 22 located in between the auger flights and fixedly attached to the auger shaft, which blades cause turbulence inside the mixer leading to greater mixing of the concrete. The paddle blades 22 have a width significantly less than the diameter of the housing so that they are well spaced from the inside wall, while the auger flighting 19 closely abuts the housing wall, as shown in Figure 5a (at 23), so as to prevent runback. Referring to Figure 5b, the respective orientations of the flighting and reverse paddles are indicated, together with white and black headed arrows denoting the flow caused by their respective motions. The mixer 4 is therefore able to dispense concrete in a horizontal position directly into an excavation since it is no longer necessary to slant the mixer upwardly to ensure sufficient mixing. Hence, extension chutes are only required where the excavation is located in an inaccessible position.

By way of example, there now follows a description of a preferred method of preparing a foam concrete in the mobile concrete making vehicle 1 described above using recycled, excavated road material.

### Preferred Example

### Preparation of a Low Density Foam Concrete

Excavated road material having a clay content of about 20% was crushed and graded to produce a final aggregate with a maximum particle size of 20 mm, and with at least 40% of the aggregate consisting of fines of 2 mm or less. The excavated material was combined with a Portland cement (or any other suitable cement-like material) in a weight ratio of 6:1, respectively. Water was then added to the mixture in a water:cement weight ratio of 0.5:1, respectively, to form a base mix. Because of the relatively high clay content of the recycled road material, the water included a plasticiser in an amount of 0.75% based on the total weight of the cement.

A foam comprising a preformed dry foam produced using an air compressor and having a density of 30 to 50 g/m³ was then added to the base mix in a volume ratio of 400 1 foam:1 m³ of base mix.

Finally, a rapid hardener (accelerator) was added. Such a hardener will usually be added in an amount of 1 to 6 weight % based on the total cement weight. The precise amount required to effect a 20 minute set to allow the excavation to have a wearing and or base courses to be applied will be dependent on the mix temperature. The temperature required of the water to ensure that a mix temperature of approximately 20°C is obtained will in turn depend on the ambient temperature. In the present trial, the outdoor temperature was 10°C, the water was heated to 50°C and the accelerator applied in the weight ratio of 6% of the cement content.

Details of the added chemicals were as follows:

| | |
|---|---|
| Plasticiser: | "Zenplus" - based on a blend of Nahchathlene formaldehyde condensation products and lignosulphonates |
| Foaming agent: | "Zenfoam" - a blend of hydrolysed protein and surfactants |
| Rapid hardener: | "Zenquick" - a highly alkaline blend of sodium hydroxide with water softening agents. |

The following settings were used on the vehicle to produce 6 m³ of foam concrete per hour at a wet density of 1275 kg/ m³ using the recycled, excavated material:

| Component | Output Rate |
|---|---|
| Water | 8.50 1/min |
| Accelerator | 1.00 1/min |
| Inhibitor (Plasticiser) | 0.13 1/min |
| Foam | 40 1/min |
| Recycled excavated material | 102 kg/min |
| Cement | 17 kg/min |

### Results

The resulting low-density foam concrete was used to backfill a small excavation. The foam concrete had a wet density of 1275 kg/m³, corresponding to an air void volume of ~42% (the mix having a density of 2200 kg/m³ prior to the addition of the foam), and had a 28-day compressive strength of about 5 N/mm². More importantly, the concrete had hardened within only 20 minutes to an early strength of 1 N/mm² that enabled permanent reinstatement to follow immediately.

Because the concrete was produced using the above described mobile concrete mixing equipment, it was possible to use heated water and a fast acting rapid hardener. This resulted in a significant time saving and associated cost savings.

In addition to the environmental considerations, the recycling of the road material also resulted in significant cost savings (owing to reduced landfill and aggregate costs), while the quality of the final foam concrete was indistinguishable from that of a prior art foam concrete.

## Claims

1. A process for producing foam concrete wherein at least a part of the aggregate (2) used to form the concrete mix is an excavated material, **characterised in that** the excavated material comprises recycled material, and **in that** the foam concrete is produced on a continuous basis using mobile concrete making equipment (1) including storage means (2,5,7) for storing the components of the concrete mix and mixing means (4) for mixing them together prior to dispensing.

2. A process as claimed in claim 1, wherein the excavated material is stored in an aggregate hopper (5) provided with vibrators that operate periodically.

3. A process as claimed in claim 1 or claim 2, wherein the foam concrete is a low density foam concrete having a wet density of not more than 1500 kg/ m³.

4. A process as claimed in any one of claims 1 to 3, wherein a preformed foam is added to the concrete mix to produce the foam concrete.

5. A process as claimed in any one of claims 1 to 4, wherein the excavated material has a maximum particle size of about 2cm.

6. A process as claimed in any one of claims 1 to 5, wherein at least 40% of the excavated material has a particle size of less than 4mm.

7. A process as claimed in any one of claims 1 to 6, wherein at least 50% by weight of the aggregate (2) in the mix is excavated material.

8. A process as claimed in claim 7, wherein substantially all the aggregate (2) in the mix is excavated material.

9. A process as claimed in claim 8, wherein the excavated material and a cement or cement-like material are present in the concrete mix in a respective ratio of between 4:1 and 8:1.

10. A process as claimed in any one of claims 1 to 9, wherein a plasticiser is added to the concrete mix to improve the fluidity of the mixture.

11. A process as claimed in any one of claims 1 to 10, wherein the foam concrete is used to backfill a road or footpath excavation.

12. A process as claimed in claim 11, wherein at least some of the material removed from the road or footpath excavation is crushed and/or graded on-site prior to being recycled to form the concrete.

## Patentansprüche

1. Verfahren zum Herstellen von Schaumbeton, wobei zumindest ein Teil des Aggregats (2); das für die Herstellung des Betongemischs verwendet wird, ein Aushubmaterial ist,
**dadurch gekennzeichnet,**
**daß** das Aushubmaterial wiederverwendetes Material aufweist
und **daß** der Schaumbeton auf kontinuierlicher Basis erzeugt wird, wobei eine mobile Betonherstellungsanlage (1) verwendet wird, die folgendes aufweist: eine Lagerungseinrichtung (2, 5, 7), um die Komponenten des Betongemischs zu lagern, und eine Mischeinrichtung (4), um sie vor der Abgabe miteinander zu vermischen.

2. Verfahren nach Anspruch 1,
wobei das Aushubmaterial in einem Aggregattrichter (5) gelagert wird, der mit Rütteleinrichtungen ausgestattet ist, die periodisch arbeiten.

3. Verfahren nach Anspruch 1 oder Anspruch 2,
wobei der Schaumbeton ein Schaumbeton niedriger Dichte mit einer Dichte im feuchten Zustand von nicht mehr als 1500 kg/m³ ist.

4. Verfahren nach einem der Ansprüche 1 bis 3,
wobei dem Betongemisch ein vorgefertigter Schaum zugesetzt wird, um den Schaumbeton zu erzeugen.

5. Verfahren nach einem der Ansprüche 1 bis 4,
wobei das Aushubmaterial eine maximale Partikelgröße von etwa 2 cm aufweist.

6. Verfahren nach einem der Ansprüche 1 bis 5,
wobei mindestens 40 % des Aushubmaterials eine Partikelgröße von weniger als 4 mm aufweisen.

7. Verfahren nach einem der Ansprüche 1 bis 6,
wobei mindestens 50 Gew.-% des Aggregats (2) in dem Gemisch Aushubmaterial sind.

8. Verfahren nach Anspruch 7,
wobei im wesentlichen das gesamte Aggregat (2) in diesem Gemisch Aushubmaterial ist.

9. Verfahren nach Anspruch 8,
wobei das Aushubmaterial und Zement oder ein zementähnliches Material in einem entsprechenden Verhältnis von 4:1 bis 8:1 im Betongemisch vorhanden sind.

10. Verfahren nach einem der Ansprüche 1 bis 9,
wobei dem Betongemisch ein Weichmacher zugesetzt wird, um die Fluidität des Gemischs zu verbessern.

11. Verfahren nach einem der Ansprüche 1 bis 10,
wobei der Schaumbeton zum Wiederauffüllen eines Aushubs in einer Straße oder einem Fußweg verwendet wird.

12. Verfahren nach Anspruch 11,
wobei zumindest ein Teil des durch den Aushub in der Straße oder dem Fußweg entfernten Materials an Ort und Stelle zerkleinert und/oder sortiert wird, bevor es für die Herstellung des Betons wiederverwendet wird.

## Revendications

1. Un procédé pour produire du béton mousse dans lequel au moins une partie de l'agrégat (2) utilisé pour former le mélange de béton est du matériau d'excavation, **caractérisé en ce que** le matériau d'excavation comporte du matériau recyclé, et **en ce que** le béton mousse est produit de manière continue en utilisant un équipement mobile de fabrication de béton (1) qui comprend des moyens de stockage (2, 5, 7) pour stocker les composants du mélange de béton et des moyens de mélange (4) pour les mélanger les uns aux autres avant de distribuer.

2. Un procédé selon la revendication 1, dans lequel le matériau d'excavation est stocké dans une trémie à agrégat (5) équipée de vibrateurs qui fonctionnent de manière périodique.

3. Un procédé selon la revendication 1 ou la revendication 2, dans lequel le béton mousse est du béton mousse de basse densité ayant une densité humide n'allant pas au-delà de 1500 kilogrammes/m³.

4. Un procédé selon l'une quelconque des revendications 1 à 3, dans lequel une mousse préformée est ajoutée au mélange de béton pour produire le béton mousse.

5. Un procédé selon l'une quelconque des revendications 1 à 4, dans lequel le matériau d'excavation a une taille de particules maximale d'environ 2 cm.

6. Un procédé selon l'une quelconque des revendications 1 à 5, dans lequel au moins 40% du matériau d'excavation a une taille de particules d'au moins 4 mm.

7. Un procédé selon l'une quelconque des revendications 1 à 6, dans lequel au moins 50% en poids de l'agrégat (2) dans le mélange est du matériau d'excavation.

8. Un procédé selon la revendication 7, dans lequel substantiellement tout l'agrégat (2) dans le mélange est du matériau d'excavation.

9. Un procédé selon la revendication 8, dans lequel du matériau d'excavation et du ciment ou un matériau similaire à du ciment sont présents dans le mélange de béton selon un rapport respectif de 4 : 1 et de 8 : 1.

10. Un procédé selon l'une quelconque des revendications 1 à 9, dans lequel un plastifiant est ajouté au mélange de béton pour améliorer la fluidité du mélange.

11. Un procédé selon l'une quelconque des revendications, 1 à 10, dans lequel le béton mousse est employé pour remblayer une excavation de route ou de sentier piéton.

12. Un procédé selon la revendication 11, dans lequel au moins une partie du matériau enlevé de l'excavation de route ou du sentier piéton est broyée et/ou calibrée sur place avant d'être recyclée pour former le béton.
